# EUROPÄISCHE PATENTSCHRIFT

(11) **EP 0 744 324 B1**
(45) Veröffentlichungstag und Bekanntmachung des Hinweises auf die Patenterteilung: **23.02.2000**
(21) Anmeldenummer: 96106476.3
(22) Anmeldetag: 24.04.1996
(51) Int. Cl.: B60R 22/44, F16G 9/00

(54) **Federangetriebener Aufroller für Sicherheitsgurte mit zwei Fadenrollen und einem diese verbindende Faden**
Spring driven seat belt retractor with two pulley linked by a string
Rétracteur pour ceinture de sécurité actionné par ressort et comportant deux poulies reliées par un fil

(30) Priorität: 22.05.1995 DE 19518773
(43) Veröffentlichungstag der Anmeldung: 27.11.1996
(73) Patentinhaber: TAKATA (EUROPE) VEHICLE SAFETY TECHNOLOGY GmbH, D-89081 Ulm (DE)
(72) Erfinder: Kopetzky, Robert, 89173 Lonsee (DE); Pleyer, Matthias, 89250 Senden (DE); Dreizler, Sabine, 89073 Ulm (DE); Müller, Frank, 89134 Blaustein (DE); Diepold, Ulrich, 89081 Ulm (DE)
(74) Vertreter: Manitz, Gerhart, Dr.

(56) Entgegenhaltungen:
- EP-A- 0 198 567
- EP-A- 0 469 104
- EP-A- 0 581 228
- DE-B- 2 547 586
- GB-A- 2 126 614
- US-A- 4 846 772

## Beschreibung

Die Erfindung betrifft einen federangetriebenen Aufroller für Sicherheitsgurte bei Kraftfahrzeugen nach dem Oberbegriff des Patentanspruchs 1.

Ein federangetriebener Aufroller der eingangs genannten Gattung ist bereits aus der EP 0 581 228 A1 und DE-A-25 47 586 bekannt. Bei einem derartigen Aufroller besteht das Problem, daß der die beiden Fadenrollen verbindende Faden während der gesamten Lebensdauer eines Kraftfahrzeuges unter einer Dauer-Zugspannung steht, die bei etwa 12 N liegt, jedoch im Betrieb bis auf maximal 30 N anwachsen kann. Außerdem wird der Faden bei jedem Sicherheitsgurt-Anlegevorgang und auch bei angelegtem Sicherheitsgurt ständig dadurch beansprucht, daß er von der einen Fadenrolle abgewickelt und auf die jeweils andere Fadenrolle aufgewickelt wird, wobei es zu Biegungen des Fadenmaterials und auch zu einem Scheuern der Fadenoberfläche an den Oberflächen der Rillen der Fadenrollen kommt, in die er eingelegt ist. Besonders gravierend ist hierbei, daß sich an den Fadenrollen scheuernder Staub befinden kann und insbesondere im Sommer auch mit sehr hohen Innentemperaturen im Fahrzeug zu rechnen ist, welche ebenfalls in nachteiliger Weise auf den Faden einwirken.

Aus der EP 0 198 567 A2 ist ein Seil bekannt, dessen Kern aus parallel zueinander verlaufenden Fasern besteht, die von einem Gewirk umgeben sind, das aus miteinander verwobenen chemischen Fasern besteht.

Das Ziel der Erfindung besteht darin, einen federangetriebenen Aufroller nach dem Oberbegriff des Patentanspruchs 1 zu schaffen, welcher während der gesamten Lebenszeit eines Kraftfahrzeuges, die bis zu 15 Jahre betragen kann, einwandfrei arbeitet und seine Eigenschaften während der Fahrzeuglebensdauer und auch bei sich stark ändernden Temperatur- und Luftfeuchtigkeitsverhältnissen nur in so geringem Maße ändert, daß dadurch die Betriebssicherheit des Aufrollers nicht beeinträchtigt wird.

Zur Lösung dieser Aufgabe sind die Merkmale des kennzeichnenden Teils des Patentanspruchs 1 vorgesehen. Besonders vorteilhafte Weiterbildungen der Erfindung entnimmt man den Ansprüchen 2 bis 4.

Durch die Verwendung eines Zwirnes mit diesen Parametern kann den extrem hohen Anforderungen an einen derartigen Faden entsprochen werden. Ein besonderer Vorteil des erfindungsgemäßen Fadens besteht darin, daß die Filamente, aus denen er besteht, auch nicht gegeneinander scheuern, wenn der Sicherheitsgurt aus- bzw. eingezogen wird. Der erfindungsgemäße Faden ist bei Temperaturen von -30° bis +100°C stabil und zeigt auch nach sehr langem Gebrauch von beispielsweise 15 Jahren keine Versprödung.

Bei einer bevorzugten Zugfestigkeit von 100 N kann der erfindungsgemäße Faden ohne weiteres eine Dauerbelastung von 12 N aushalten, die bis maximal 30 N gesteigert werden kann.

Die Erfindung wird im folgenden beispielsweise anhand der Zeichnung beschrieben; in dieser zeigt:
- Fig. 1: eine teilweise geschnittene schematische Wiedergabe eines federangetriebenen Gurtaufrollers für Sicherheitsgurte bei Kraftfahrzeugen mit einem erfindungsgemäßen Faden,
- Fig. 2: eine perspektivische Ansicht der Fadenrollen nach Fig. 1 mit dem aufgewickelten Faden,
- Fig. 3: eine Stirnansicht des Gegenstandes der Fig. 2 mit zwei Möglichkeiten der Führung des Fadens von einer Fadenrolle zur anderen,
- Fig. 4: eine Seitenansicht einer weiteren Ausführungsform der Fadenrollen bei einem Aufroller nach Fig. 1 und
- Fig. 5: eine teilweise geschnittene Seitenansicht eines Ausschnittes eines bei dem beschriebenen federangetriebenen Aufroller verwendeten Fadens in etwa 100-fach vergrößertem Maßstab.

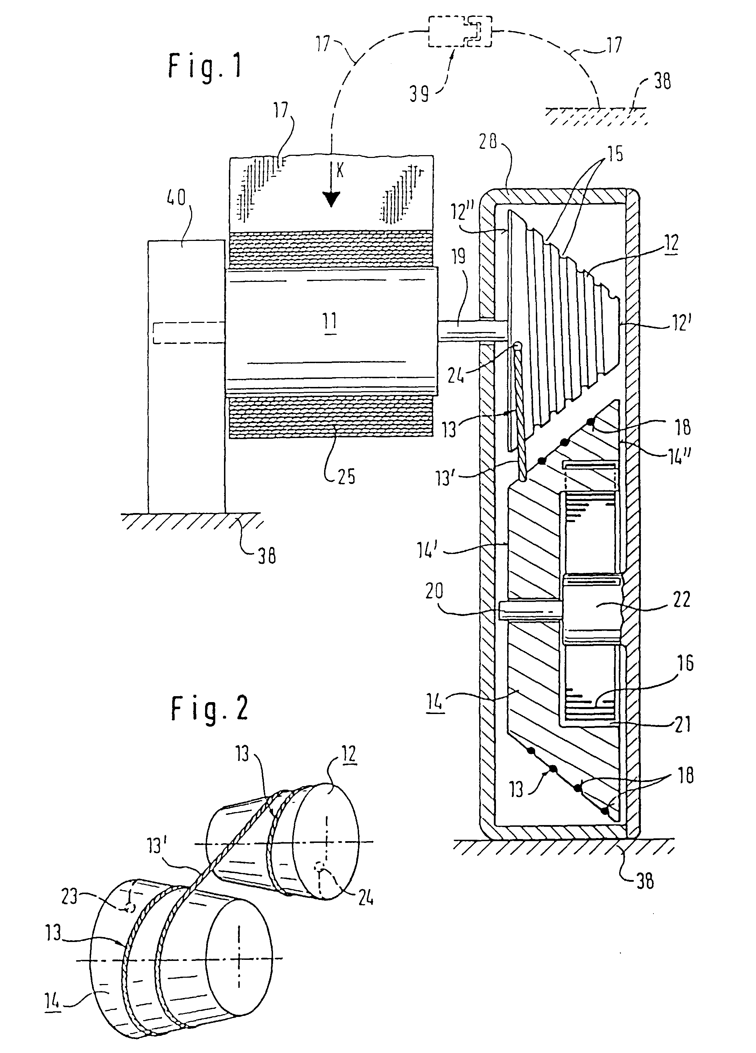

Nach Fig. 1 weist ein erfindungsgemäßer Gurtaufroller eine Gurtrolle 11 auf, auf die ein nur mit einem kurzen Stück angedeuteter Sicherheitsgurt 17 aufwickelbar ist, der in der gestrichelt angedeuteten Weise über ein übliches Gurtschloß 39 um den Körper eines nicht dargestellten Fahrzeuginsassen herum zum Fahrzeugchassis 38 geführt und dort befestigt ist. Die Erfindung ist aber nicht nur bei Zwei-, sondern auch bei Dreipunktgurten anwendbar. Die Gurtrolle 11 ist mittels einer Drehwelle 19 drehbar an einem Gehäuse 28 gelagert, welches seinerseits unten am Fahrzeugchassis 38 befestigt ist. An dem von der Gurtrolle 11 abgewandten Ende der Drehwelle 19 ist innerhalb des Gehäuses 28 eine konisch ausgebildete Fadenrolle 12 mit einer kleinen und einer großen Stirnfläche 12' bzw. 12" angeordnet, welche auf ihrem Umfang mit einer wendelförmigen Führungsrille 15 versehen ist. Auf der von der Fadenrolle 12 abgewandten Stirnseite der Gurtrolle 11 ist nur rein schematisch eine Gurtauszugs-Sperrvorrichtung 40 angedeutet, welche am Fahrzeugchassis 38 befestigt ist und das weitere Ausziehen des Gurtes 17 bei unfallbedingten Beschleunigungen und/oder einem zu plötzlichen Ausziehen des Sicherheitsgurtes 17 verhindert.

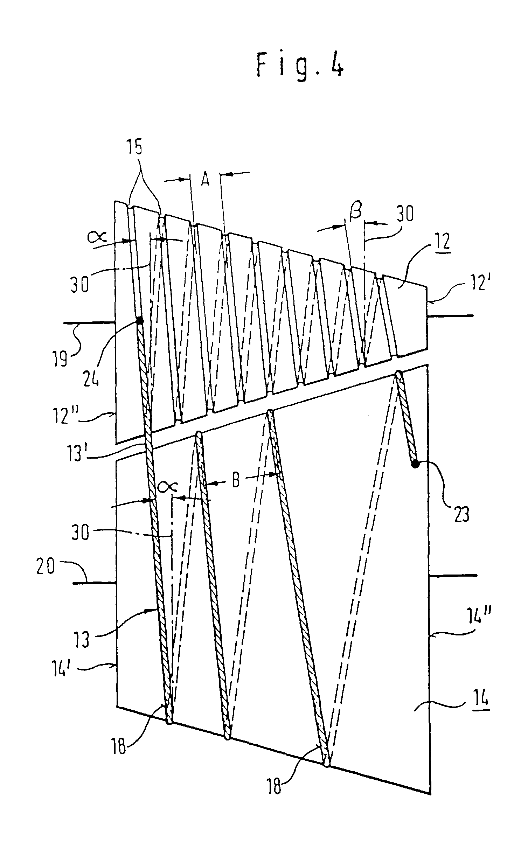

Nach Fig. 1 und 4 ist neben der Fadenrolle 12 mit paralleler Achse 20 und seitlich ausgerichtet eine weitere, eine kleine und eine große Stirnfläche 14' bzw. 14'' aufweisende Fadenrolle 14 vorgesehen, welche gegenläufig zu der ersten Fadenrolle 12 konisch verläuft und deren kleinerer Durchmesser gleich dem größeren Durchmesser der ersten Fadenrolle 12 ist. Die in Fig. 1 linke große Stirnfläche 12'' und rechte kleine Stirnfläche 12' der kleinen Fadenrolle 12 liegt im wesentlichen in einer Ebene mit der linken kleinen Stirnfläche 14' und rechten großen Stirnfläche 14'' der großen Fadenrolle 14. Auch die zweite Fadenrolle 14 weist auf ihrem Umfang eine wendelförmige Führungsrille 18 auf, deren genauer geometrischer Verlauf Fig. 4 zu entnehmen ist.

Die zweite Fadenrolle 14 sitzt drehbar auf einer gehäusefesten Welle 20, die parallel und im seitlichen Abstand zur Welle 19 am Gehäuse 28 befestigt ist.

Die zweite Fadenrolle 14 weist gemäß Fig. 1 auf der Seite ihrer großen Stirnfläche einen koaxialen Hohlraum 21 auf, in welchem eine Spiralfederanordnung 16 vorgesehen ist, die einerseits an einem die Welle 20 tragenden gehäusefesten Zapfen 22 und andererseits an der Umfangswand des Hohlraumes 21 der Fadenrolle 14 befestigt ist. Die Spiralfeder 16 überträgt auf die Fadenrolle 14 ein Drehmoment, welche einen in ihre Führungsrille 18 eingelegten und gemäß Fig. 4 bei 23 befestigte Faden 13 aufzuwickeln sucht. Der Faden 13 erstreckt sich nach den Fig. 1 und 4 von dem engsten Teil der Fadenrolle 14 zu einem damit ausgerichteten Teil der Führungsrille 15 der ersten Fadenrolle 12, wo der Faden 13 bei 24 an der Fadenrolle 12 befestigt ist.

In der aus Fig. 1 und 4 ersichtlichen Wickelposition ist der Faden 13 weitgehend vollständig auf die Fadenrolle 14 aufgewickelt und weitgehend vollständig von der ersten Fadenrolle 12 abgewickelt. In diesem Zustand weist der Gurtwickel 25 auf der Gurtrolle 11 den größten Durchmesser auf, d.h., daß nunmehr eine maximale Gurtlänge auf der Gurtrolle 11 aufgewickelt ist und der Gurt 17 am weitesten eingezogen ist.

Wird nun der Gurt 17 entgegen der Rückzugskraft K in Fig.1 ausgezogen, so dreht sich die erste Fadenrolle 12 in einem solchen Drehsinn, daß der Faden 14 sukzessive auf die erste Fadenrolle 12 aufgewickelt und von der zweiten Fadenrolle 14 abgewickelt wird, wobei er sich zunehmend in die Führungsrille 15 einlegt und aus der Führungsrille 18 entfernt.

Da der Steigungswinkel a, d.h. der Winkel zwischen der geradlinigen Verlängerung der Führungsrillen 15, 18 an den Einmündungsstellen des geradlinigen Fadenstückes 13' und der senkrecht auf der Drehachse 19, 20 stehenden Ebene 30 gleich ist und außerdem durch entsprechende Befestigung der Fadenenden bei 23, 24 dafür gesorgt ist, daß das frei und geradlinig zwischen den Fadenrollen 12, 14 verlaufende Fadenstück 13' knickfrei in die beiden Führungsrillen 15, 18 einmündet, nimmt bei gleichmäßigem axialen Abstand A der Führungsrille 15 auf der ersten Fadenrolle 12 der axiale Abstand B der Windungen der Führungsrille 18 auf der einen größeren Durchmesser aufweisenden Fadenrolle 14 in der aus Fig. 4 ersichtlichen Weise axial zu größerem Durchmesser hin stetig zu.

Daß die Windungen der wendelförmigen Führungsrille 15 auf der ersten Fadenrolle 12 um das gleiche axiale Stück A versetzt sind, bedeutet, daß vom großen zum kleinen Durchmesser der Steigungswinkel sich von α auf β erhöht.

Es wäre auch denkbar, die Führungsrille 15 auf dem Umfang der Fadenrolle 12 so zu führen, daß der Steigungswinkel α konstant ist, was jedoch bedeuten würde, daß der axiale Abstand A benachbarten Windungen der Führungsrille 15 mit kleiner werdendem Durchmesser abnimmt. Dementsprechend wäre auch der axiale Abstand B benachbarter Windungen der Führungsrille 18 der Fadenrolle 14 zu reduzieren und dort der Steigungswinkel konstant zu lassen.

In Fig. 2 ist die Anordnung der beiden gegenläufig konischen Fadenrollen 12, 14 und des aufgewickelten Fadens 13 perspektivisch schematisch veranschaulicht, ohne daß die Führungsrillen 15, 18 gezeigt sind.

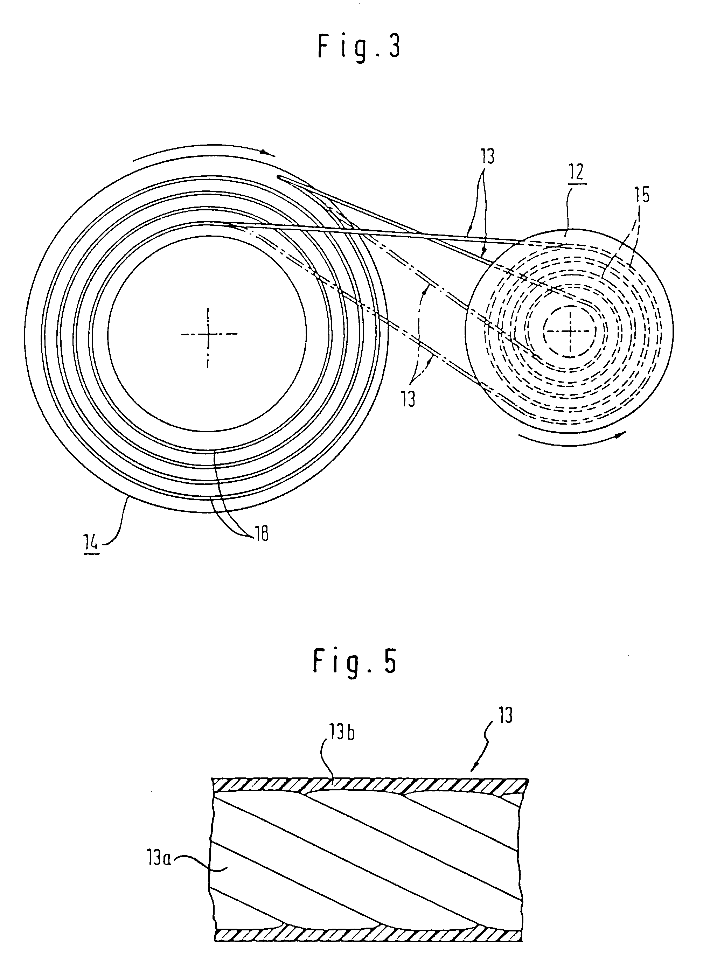

Fig. 3 zeigt bei zwei Ausführungsformen die beiden Endpositionen des Fadens 13 im voll aufgewickelten bzw. voll abgewickelten Zustand auf den beiden Fadenrollen 12 bzw. 14.

Nach Fig. 3 ist der Faden 13 in ausgezogenen Linien über Kreuz tangential an die benachbarten Fadenrollen 12, 14 geführt dargestellt. Strichpunktiert ist der voll aufgewickelte bzw. der voll abgewickelte Zustand des Fadens 13 in einer nicht gekreuzten gleichlaufenden Führung von einer Fadenrolle 12 zur benachbarten Fadenrolle 14 gezeigt.

Der kleinere Durchmesser der Fadenrolle 12 kann z.B. 15 mm oder etwas größer sein, während der größere Durchmesser der kleineren Fadenrolle 12 bei 30 bis 35 mm liegen soll. Dementsprechend ist der kleinere Durchmesser der Fadenrolle 14 30 bis 35 mm und der größere Durchmesser der Fadenrolle 14 100 bis 120 mm.

Nach Fig. 5 besteht der erfindungsgemäß verwendete Faden 13 aus einem Zwirn bzw. Garn 13a, welcher aus Aramid-Multifilamenten einer Feinheit von beispielsweise 250 x 3 dtex besteht. Die Garndrehung S liegt bei 580 T/m, die Zwirndrehung Z bei 338 T/m. Die Mindestzugkraft beträgt 100 N, während die Bruchdehnung kleiner als 4% sein soll.

Erfindungsgemäß ist der Zwirn 13a mit einer Rundum-Beschichtung 13b versehen, welche aus Polyamid besteht und eine glatte, scheuerfeste Außenoberfläche aufweisen soll. Die Dicke der Beschichtung liegt bei etwa 10% des Durchmessers des Fadens 13.

Aufgrund dieser Ausbildung kann der Faden 13 die durch die Federanordnung 16 dauernd ausgeübte Zugspannung von größenordnungsmäßig 10 N über lange Zeiträume aushalten, ohne sich merklich zu dehnen oder seine Festigkeitseigenschaften zu verlieren. Auch eine Versprödung des Fadens über längere Zeiträume erfolgt nicht, und zwar selbst dann nicht, wenn im Kraftfahrzeug hohe Temperaturen herrschen sollten.

## Patentansprüche

1. Federangetriebener Aufroller für Sicherheitsgurte (17) bei Kraftfahrzeugen mit einer Gurtrolle (11), die durch eine bei unfallbedingten Beschleunigungen und/oder bei versuchtem schnellen Auszug des Sicherheitsgurtes (17) auslösbare Auszugssperre (40) gegen Drehung in Auszugsrichtung sperrbar ist und drehfest, insbesondere koaxial und direkt, mit einer ersten, sich in Axialrichtung verjüngenden Fadenrolle (12) mit einer wendelförmigen Führungsrille (15) auf ihrem Umfang verbunden ist, welche über den entgegen dem Wickelsinn des Sicherheitsgurtes (17) auf der Gurtrolle (11) in die Führungsrille (15) gewickelten, mit einem Ende an der Fadenrolle (12) befestigten Faden (13) drehfest mit einer weiteren parallel und in seitlicher Ausrichtung zu ihr angeordneten, zweiten sich in entgegengesetzter Axialrichtung verjüngenden Fadenrolle (14) mit einer wendelförmigen Führungsrille (18) verbunden ist, an der das andere Ende des Fadens (13) befestigt und in deren Führungsrille (18) der Faden (13) aufgewickelt ist und die durch eine Federanordnung (16), vorzugsweise eine Spiralfederanordnung, in Aufwickelrichtung des Fadens (13) auf der zweiten Fadenrolle (14) und des Sicherheitsgurtes (17) auf der Gurtrolle (11) vorgespannt ist, wobei die beiden Führungsrillen (15, 18) derart ausgebildet und auf den Fadenrollen (12, 14) angeordnet sind, daß das die beiden Fadenrollen (12, 14) verbindende gespannte Fadenstück (13') zumindest im wesentlichen knickfrei in beide auf den Fadenrollen (12, 14) befindlichen Fadenwindungen übergeht,
dadurch gekennzeichnet,
daß der Faden (13) aus einem auf seinem Umfang mit einer Beschichtung (13b) versehenen Zwirn (13a) besteht und daß die Zugfestigkeit des Zwirnes (13a) 50 bis 200 N, insbesondere 80 bis 120 N und vorzugsweise ungefähr 100 N beträgt und/oder daß die Bruchdehnung des Fadens kleiner als 4% ist und/oder daß der Zwirn (13a) eine Feinheit von 250 x 3 dtex aufweist und/oder daß der Zwirn einen Durchmesser von 0,2 bis 0,6 mm, insbesondere 0,3 bis 0,5 mm und vorzugsweise etwa 0,4 mm aufweist.

2. Aufroller nach Anspruch 1,
dadurch gekennzeichnet,
daß das Material des Zwirnes (13a) eine hohe Dauerzugfestigkeit und eine minimale Dehnung unter Dauerzugbeanspruchung aufweist, wobei insbesondere der Zwirn (13a) aus Aramid-Filamenten, insbesondere Aramid-Endlosfilamenten besteht.

3. Aufroller nach Anspruch 1 oder 2,
dadurch gekennzeichnet,
daß die Beschichtung (13b) eine scheuerfeste, insbesondere glatte Oberfläche aufweist, wobei insbesondere die Beschichtung (13b) aus Polyamid besteht.

4. Aufroller nach Anspruch 3,
dadurch gekennzeichnet,
daß die Dicke der Beschichtung (13b) 5 bis 20, vorzugsweise 5 bis 15 und insbesondere etwa 10% des Durchmesser des Zwirnes (13a) beträgt.

## Claims

1. Spring-driven reeling mechanism for safety belts (17) in motor vehicles comprising a belt reel (11), which is blocked against rotation in the pull-out direction by a pull-out blocking mechanism (40) triggerable with accelerations caused by accidents and/or with an attempted rapid pull-out of the safety belt (17) and which is rotationally fixedly connected, in particular coaxially and directly connected to a first thread reel (12) tapering in the axial direction and having a spiral-like guide groove (15) on its periphery, the first thread reel (12) being rotationally fixedly connected to a further, second thread reel (14) tapering in the opposite axial direction arranged parallel and in lateral alignment to it, while tapering in the opposite axial direction and having a spiral guide groove (18) to which the other end of the thread (13) is secured and in the guide groove (18) of which the thread (13) is wound up, the second thread reel (14) being biased by a spring arrangement (16), preferably a spiral spring arrangement, in the winding up direction of the thread (13) onto the second thread reel (14) and of the safety belt (17) onto the belt reel (11), with the two guide rolls (15, 18) being so formed and arranged on the thread reels (12, 14) that the tensioned thread piece (13') connecting the two thread reels (12, 14) merges at least substantially kink-free into the two thread turns located on the thread reels (12, 14), characterized in that the thread consists of a twisted thread (13) provided at the periphery with a coating (13b) and in that the tensile strength of the twisted thread (13a) amounts to 50 to 200 N, in particular to 80 to 120 N, and preferably to approximately 100 N and/or in that the braking elongation of the thread is smaller than 4 %, and/or in that the twisted thread (13a) has fineness of 250 x 3 dtex and/or in that the twisted thread has a diameter of 0.2 to 0.6 mm, in particular 0.3 to 0.5 mm and preferably approximately 0.4 mm.

2. Reeling mechanism in accordance with claim 1, characterized in that the material of the twisted thread (13a) has a high permanent tensile strength and a minimal elongation under permanent tensile loading, with the twisted thread (13a) consisting of aramide filaments, in particular endless aramide filaments.

3. Reeling mechanism in accordance with claim 1 or claim 2, characterized in that the coating (13b) has an abrasion resistant, in particular smooth surface, with the coating (13b) consisting in particular of polyamide.

4. Reeling mechanism in accordance with claim 3, characterized in that the thickness of the coating (13b) amounts to 5 to 20, preferably 5 to 15 and approximately to 10 % of the diameter of the twisted thread (13a).

## Revendications

1. Enrouleur à entraînement par ressort pour ceinture de sécurité (17) dans des véhicules, comprenant un rouleau à ceinture (11) qui est susceptible d'être bloqué à l'encontre d'une rotation dans la direction de déroulement par un blocage de déroulement (40) déclenché lors de l'apparition d'accélérations provoquées par un accident et/ou lors de la tentative d'un déroulement rapide de la ceinture de sécurité (17), et est relié solidairement en rotation, en particulier coaxialement et directement, à un premier rouleau à fil (12) en rétrécissement en direction axiale et pourvu d'une rainure de guidage hélicoïdale (15) à sa périphérie, ce premier rouleau étant relié solidairement en rotation par l'intermédiaire d'un fil (13) enroulé dans la rainure de guidage (15) en direction opposée au sens d'enroulement de la ceinture de sécurité (17) sur le rouleau à ceinture (11), une extrémité de ce fil étant fixée au premier rouleau à fil (12), à un autre deuxième rouleau à fil (14) agencé parallèlement et en alignement latéral vis-à-vis de lui-même, en rétrécissement en direction axiale opposée et doté d'une rainure de guidage hélicoïdale (18), l'autre extrémité du fil (13) étant fixée au deuxième rouleau à fil et enroulée dans la rainure de guidage (18) de celui-ci, ledit deuxième rouleau à fil étant précontraint par un agencement à ressort (16), de préférence un agencement à ressort spiralé, dans la direction d'enroulement du fil (13) sur le deuxième rouleau à fil (14) et de la ceinture de sécurité (17) sur le rouleau à ceinture (11), et dans lequel les deux rainures de guidage (15, 18) sont réalisées de telle manière et agencées de telle manière sur les rouleaux à fil (12, 14) que le brin de fil (13') tendu qui relie les deux rouleaux à fil (12, 14) se transforme au moins sensiblement sans coude dans les deux spires de fil disposées sur les rouleaux à fil (12, 14),
caractérisé en ce que le fil (13) est constitué par un fil retors (13a) pourvu sur sa circonférence d'un revêtement (13b), et en ce que la résistance du fil retors (13a) à la traction s'élève à 50 à 200 N, en particulier 80 à 120 N, et de préférence environ 100 N et/ou en ce que l'allongement à la rupture du fil est inférieur à 4% et/ou en ce que le fil retors (13a) présente une finesse de 250 x 3 dtex et/ou en ce que le fil retors a un diamètre de 0,2 à 0,6 mm, en particulier de 0,3 à 0,5 mm, et de préférence environ 0,4 mm.

2. Enrouleur selon la revendication 1, caractérisé en ce que le matériau du fil retors (13a) présente une résistance permanente à la traction élevée et un allongement minimum sous une contrainte permanente en traction, et en ce que fil retors (13a) est constitué en particulier en filaments aramide, en particulier en filaments aramide sans fin.

3. Enrouleur selon l'une ou l'autre des revendications 1 et 2, caractérisé en ce que le revêtement (13b) présente une surface résistante à l'abrasion, en particulier lisse, et en ce que le revêtement (13b) est constitué en particulier en polyamide.

4. Enrouleur selon la revendication 3, caractérisé en ce que l'épaisseur du revêtement (13b) s'élève de 5 à 20, de préférence de 5 à 15, et en particulier à environ 10% du diamètre du fil retors (13a).
